# EUROPEAN PATENT APPLICATION

(11) **EP 4 692 592 A1**
(43) Date of publication of application: **11.02.2026**
(21) Application number: 25194714.9
(22) Date of filing: 07.08.2025
(51) Int. Cl.: F16G 13/04, F16G 13/06, F16H 7/06, F16H 55/08, F16H 55/30

(54) **SILENT CHAIN AND CHAINRING**

(30) Priority: 09.08.2024 TW 113130058
(71) Applicant: KMC Chain Industrial Co., Ltd., Tainan City 712003 (TW)
(72) Inventor: WU, Daniel, 708009 Tainan City (TW)
(74) Representative: Regimbeau

(57) **Abstract**

A silent chain (4) includes a plurality of inner links (5), a plurality of outer links (6), and a plurality of rotation rods (7). The inner links (5) are arranged along a transmission direction (D). At least one of the inner links (5) includes an inner plate unit (51), and an inner chain body (52) that is fixedly disposed on an outer side of the inner plate unit (51) and that has an engagement protrusion (522). The outer links (6) are spaced apart from each other and are disposed on outer sides of the inner links (5). The outer links (6) and the inner links (5) are disposed in an alternating arrangement. The rotation rods (7) interconnect the inner links (5) and the outer links (6) in series so that each of the inner links (5) is rotatable relative to each of two adjacent ones of the outer links (6)

## Description

The disclosure relates to a power transmission mechanism, and more particularly to a chain and a chainring.

Power transmission technologies of an electric motor system may generally be categorized into belt drive transmission and chain drive transmission. The belt drive transmission has the merit of generating lower vibration noise and requiring less maintenance. The chain drive transmission has the merit of higher rigidity, easy assembly, and being able to be assembled with chain joints without damaging a vehicle frame. Therefore, if the belt drive transmission technology can be integrated into a chain, a new type of a transmission component with higher performance of transmission may be created. In addition, because a conventional chain has to engage a chainring by using inner links and outer links thereof to alternately engage the chainring, the inner links and the outer links of the conventional chain can only be designed with the same pitch. Thus, there is a lack of flexibility in the design specification of chain plates of the conventional chain.

Therefore, an object of the disclosure is to provide a silent chain that can alleviate the drawback of the prior art.

According to an aspect of the disclosure, there is provided a silent chain according to claim 1.

Another object of the disclosure is to provide a chainring that can alleviate the drawback of the prior art.

According to an aspect of the disclosure, there is provided a chainring according to claim 14.

Other features and advantages of the disclosure will become apparent in the following detailed description of the embodiment(s) with reference to the accompanying drawings. It is noted that various features may not be drawn to scale.
FIG. 1 is a perspective view illustrating structures of a first embodiment of a silent chain and an embodiment of a chainring according to the disclosure. The silent chain is fragmentarily shown.
FIG. 2 is a fragmentary side view illustrating the structures of the silent chain and the chainring of FIG. 1.
FIG. 3 is a sectional view of the embodiment of the chainring.
FIG. 4 is a partly exploded perspective view of a segment of the first embodiment of the silent chain.
FIG. 5 is a perspective view of an inner link of the first embodiment of the silent chain.
FIG. 6 is an exploded perspective view illustrating an inner plate unit of the first embodiment of the silent chain.
FIG. 7 is a side view illustrating a structure of the inner link of the first embodiment of the silent chain.
FIG. 8 is a sectional view taken along line VIII-VIII of FIG. 7.
FIG. 9 is a perspective view of an inner link of a second embodiment of the silent chain according to the present disclosure.
FIG. 10 is an exploded perspective view of an inner plate unit of the second embodiment of the silent chain.
FIG. 11 is a perspective view of an inner link of a third embodiment of the silent chain according to the present disclosure.
FIG. 12 is a side view illustrating the inner link of the third embodiment of the silent chain.
FIG. 13 is a sectional view taken along line XIII-XIII of FIG. 12.
FIG. 14 is an exploded perspective view of an inner plate unit of a fourth embodiment of the silent chain according to the present disclosure.
FIG. 15 is a side view illustrating a structure of an inner link of the fourth embodiment of the silent chain.
FIG. 16 is a sectional view taken along line XVI-XVI of FIG. 15.
FIG. 17 is an exploded perspective view of an inner plate unit of a fifth embodiment of the silent chain according to the present disclosure.
FIG. 18 is a side view illustrating a structure of an inner link of the fifth embodiment of the silent chain.
FIG. 19 is a sectional view taken along line XIX-XIX of FIG. 18.
FIG. 20 is a perspective view of an inner link of a sixth embodiment of the silent chain according to the present disclosure.
FIG. 21 is a side view illustrating a structure of the inner link of the sixth embodiment of the silent chain.
FIG. 22 is a sectional view taken along line XXII-XXII of FIG. 21.
FIG. 23 is a perspective view of an inner link of a seventh embodiment of the silent chain according to the present disclosure.
FIG. 24 is a side view illustrating a structure of the inner link of the seventh embodiment of the silent chain.
FIG. 25 is a sectional view taken along line XXV-XXV of FIG. 24.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

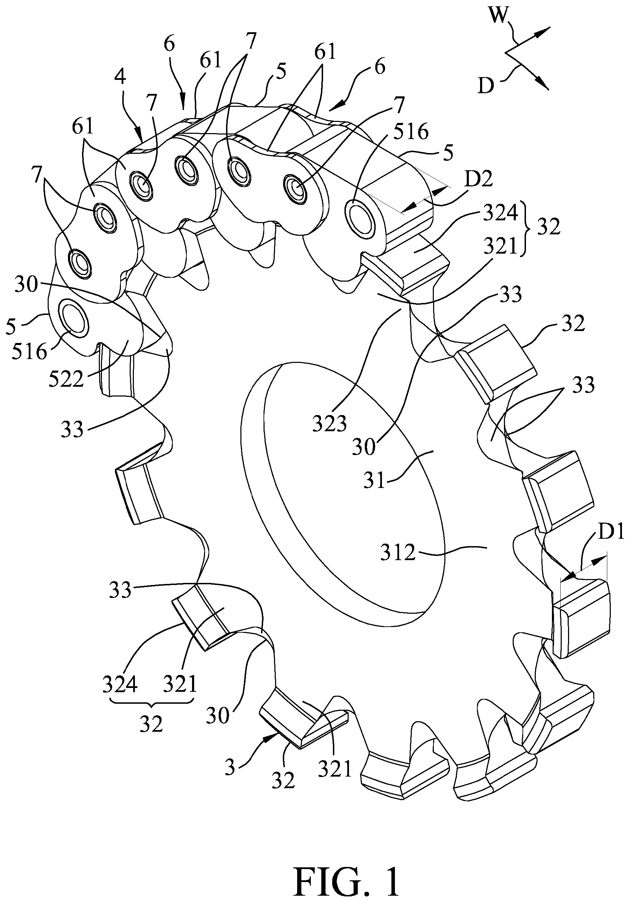

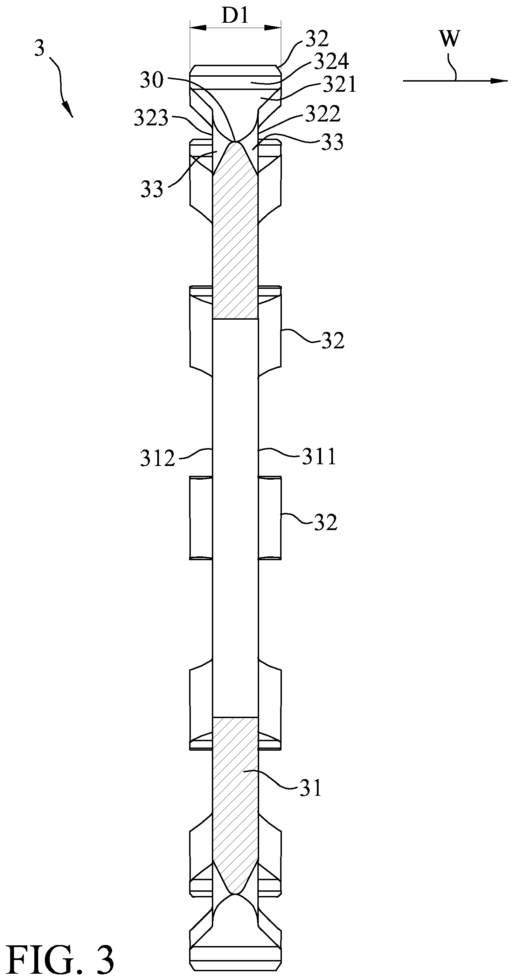

Referring to FIGS. 1, 2, and 3, an embodiment of a chainring 3 according to the disclosure includes an annular main body 31 that is in a shape of an annular plate, and a plurality of engagement teeth 32 that are spaced apart from each other, that are arranged about a central axis (not shown) of the annular main body 31, and that protrude from an outer periphery of the annular main body 31. The annular main body 31 has an inner side surface 312, an outer side surface 311 that is opposite to the inner side surface 312 in a width direction (W), and a plurality of sewage discharge grooves 33 that are arranged about the central axis of the annular main body 31, and that are recessed from the outer side surface 311 and the inner side surface 312.

Each of the engagement teeth 32 has a tooth portion 321 that protrudes radially and outwardly from the annular main body 31, and a tooth crown portion 324 that is connected to an end of the tooth portion 321 opposite to the annular main body 31. The tooth portion 321 of each of the engagement teeth 32 has a tooth inner surface 323, and a tooth outer surface 322 that is opposite to the tooth inner surface 323 in the width direction (W). The tooth portions 321 of any two adjacent ones of the engagement teeth 32 cooperatively define a tooth base 30 (i.e., the chainring 3 may have a plurality of tooth bases 30). In this embodiment, each of the tooth bases 30 is located near a respective one of the sewage discharge grooves 33 that are recessed from the outer side surface 311, and near a respective one of the sewage discharge grooves 33 that are recessed from the inner side surface 312. For the sewage discharge grooves 33 that are recessed from the outer side surface 311, each of the sewage discharge grooves 33 broadens radially outwardly, and extends from the outer side surface 311 to the respective one of the tooth bases 30 to form a sloping edge (i.e., the sewage discharge grooves 33 are configured to be sloping grooves). For the sewage discharge grooves 33 that are recessed from the inner side surface 312, each of the sewage discharge grooves 33 broadens radially outwardly, and extends from the inner side surface 312 to the respective one of the tooth bases 30 to form a sloping edge (i.e., the sewage discharge grooves 33 are configured to be sloping grooves).

For each of the engagement teeth 32, the tooth crown portion 324 protrudes outwardly from the tooth inner surface 323 and the tooth outer surface 322 of the tooth portion 321 in the width direction (W) so that a thickness (D1) of the tooth crown portion 324 in the width direction (W) is greater than a thickness of the tooth portion 321 in the width direction (W). In some embodiments, for each of the engagement teeth 32, the tooth crown portion 324 may protrude symmetrically and outwardly from the tooth inner surface 323 and the tooth outer surface 322 of the tooth portion 321 in the width direction (W). However, in some embodiments, for each of the engagement teeth 32, the tooth crown portion 324 may protrude outwardly from only one of the tooth inner surface 323 and the tooth outer surface 322 of the tooth portion 321 in the width direction (W).

Referring to FIGS.1, 2, and 4, a first embodiment of a silent chain 4 according to the disclosure is used in cooperation with the chainring 3 for power transmission. The chainring 3 is for driving the silent chain 4. The silent chain 4 includes a plurality of inner links 5 that are arranged in a transmission direction (D), a plurality of outer links 6 that are spaced apart from each other along the transmission direction (D) and that are disposed on outer sides of the inner links 5, and a plurality of rotation rods 7. The outer links 6 and the inner links 5 are disposed in an alternating arrangement along the transmission direction (D). The rotation rods 7 interconnect the inner links 5 and the outer links 6 in series. The thickness (D1) of the tooth crown portion 324 of each of the engagement teeth 32 is not greater than a width (D2) of each of the inner links 5 in the width direction (W). A pitch (D3) of the inner links 5 and a pitch (D4) of the outer links 6 may be different. In this embodiment, a difference between the pitch of the inner links 5 and the pitch of the outer links 6 is greater than 0.3 millimeters, but less than a smaller one of the pitch of the inner links 5 and the pitch of the outer links 6.

It is noted that the silent chain 4 is configured to be looped in use. For explanatory convenience, only a segment of the silent chain 4 is shown in the drawings. One of the inner links 5 and one of the outer links 6 will hereafter be taken as examples for elaboration of structures of the inner links 5 and the outer links 6.

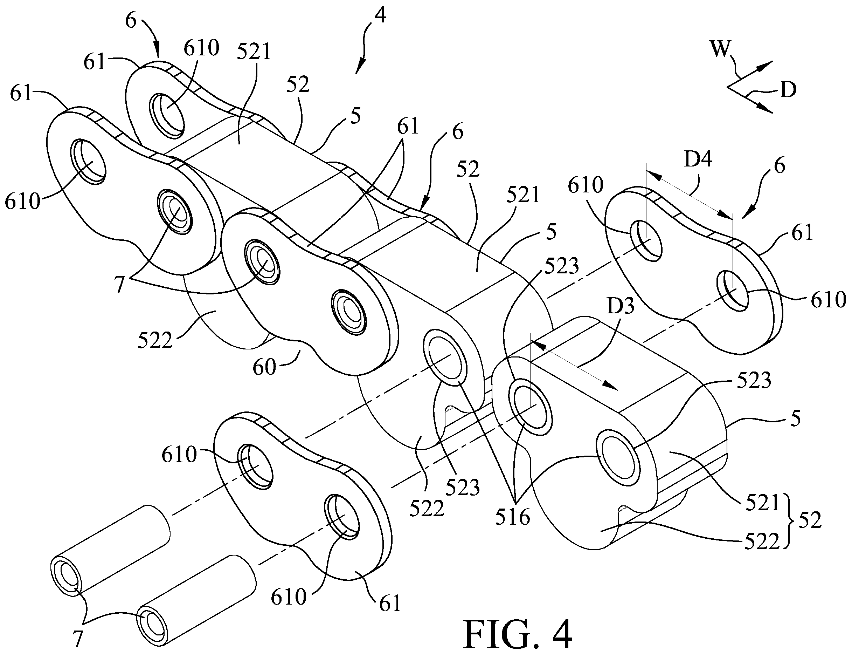

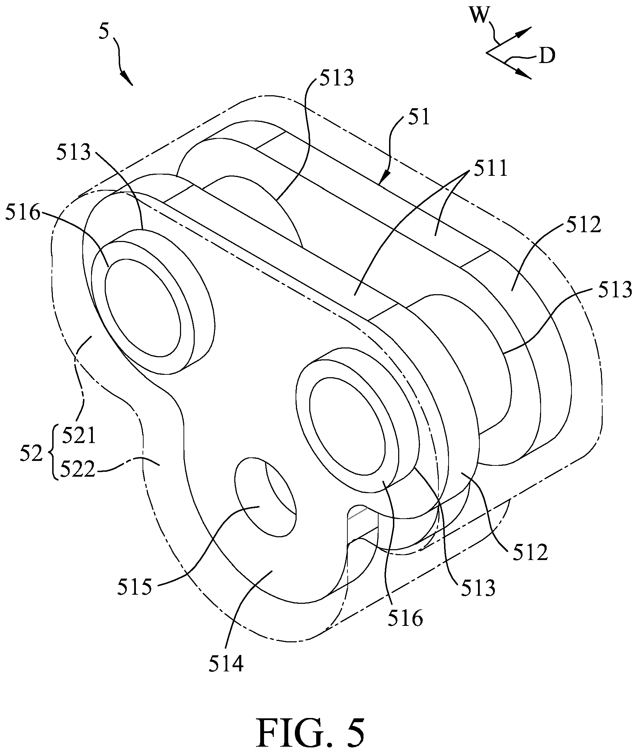

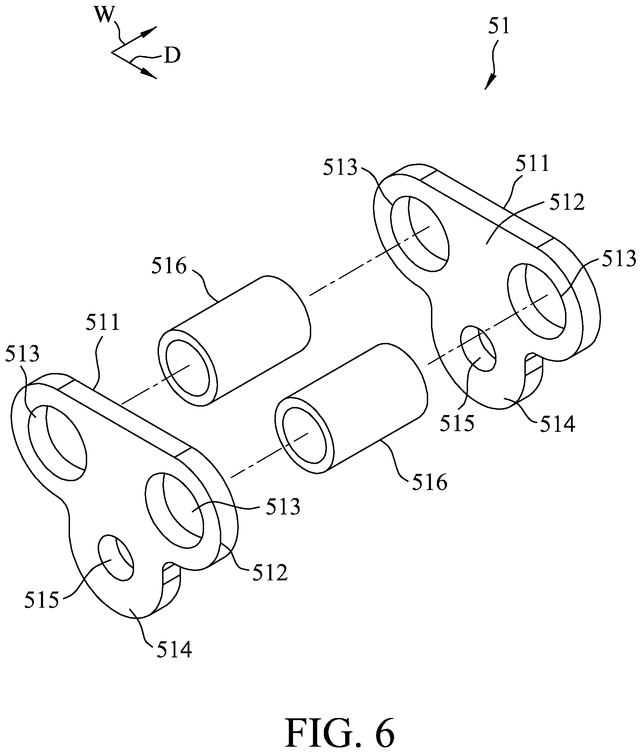

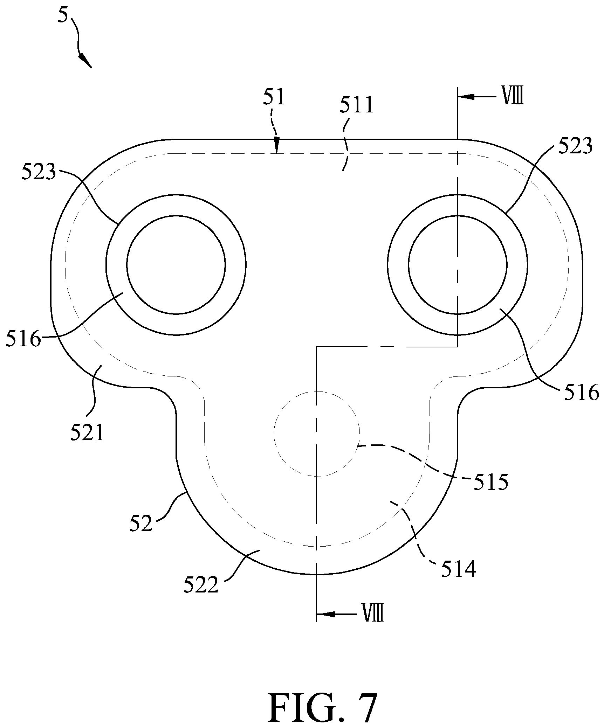

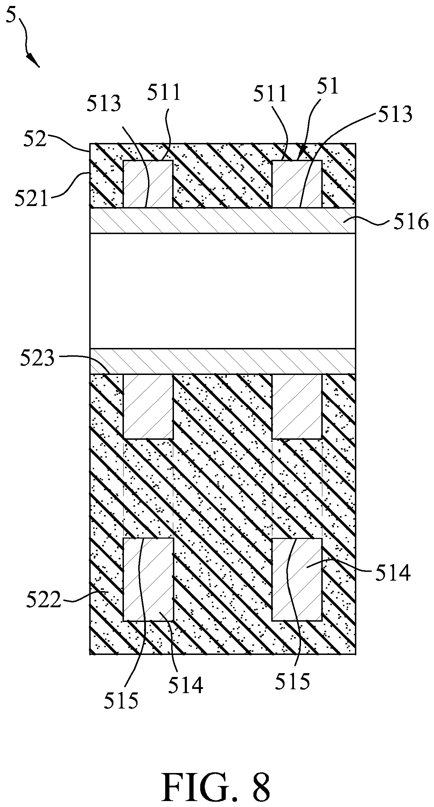

Referring to FIGS. 4 to 8, the inner link 5 includes an inner plate unit 51, and an inner chain body 52 that covers the inner plate unit 51 and that is made of a nonmetallic material. The nonmetallic material may be, for example, rubber materials or plastic materials, but may not be limited thereto.

The inner plate unit 51 includes two inner plates 511 that are spaced apart from each other and that are arranged oppositely, and two bushings 516. Each of the inner plates 511 has a rotation connection portion 512, two inner communication holes 513 that are spaced apart from each other and that are formed in the rotation connection portion 512, and a protrusion portion 514 that protrudes from the rotation connection portion 512 towards the chainring 3 in an engagement direction. The bushings 516 are respectively and fixedly disposed in the inner communication holes 513 of each of the inner plates 511, and respectively extend through and stick out from the inner communication holes 513 of each of the inner plates 511 to stick out from the inner plates 511. The protrusion portion 514 of each of the inner plates 511 has an inner hole 515 that extends therethrough.

The inner chain body 52 is fixedly disposed on and covers outer sides of the inner plates 511 via an overmolding process, and has a main body portion 521 that covers outer sides of the rotation connection portions 512 of the inner plates 511 and that covers an outer periphery of each of the bushings 516, an engagement protrusion 522 that protrudes from the main body portion 521 in the engagement direction, that covers the protrusion portions 514 of the inner plates 511, and that fills the inner holes 515 of the inner plates 511, and two through holes 523 that are formed in the main body portion 521. The through holes 523 are respectively in spatial communication with the inner communication holes 513 of each of the inner plates 511 so that the bushings 516 respectively extend through the through holes 523 and are exposed from the through holes 523. A length of the protrusion portion 514 of each of the inner plates 511 of the inner plate unit 51 in the engagement direction is no greater than a length of the engagement protrusion 522 of the inner chain body 52 in the engagement direction.

The outer link 6 includes two outer plates 61 that are spaced apart from each other, and that are oppositely and respectively disposed on outer sides of the inner chain bodies 52 of two adjacent ones of the inner links 5 (i.e., the outer plates 61 of the outer links 6 are disposed on two opposite sides of the inner chain bodies 52 of the inner links 5, the outer plates 61 that are disposed on one of the opposite sides of the inner chain bodies 52 and the inner chain bodies 52 are disposed in an alternating arrangement along the transmission direction, and the outer plates 61 that are disposed on another one of the opposite sides of the inner chain bodies 52 and the inner chain bodies 52 are also disposed in the alternating arrangement along the transmission direction). The outer plates 61 of the outer link 6 cooperate with the inner chain bodies 52 of the two adjacent ones of the inner links 5 to define an engagement space 60 that opens towards the engagement direction. Each of the outer plates 61 has two outer communication holes 610. One of the outer communication holes 610 of each of the outer plates 61 is in spatial communication with an adjacent one of the through holes 523 of the inner chain body 52 of one of the two adjacent ones of the inner links 5, and is in spatial communication with an adjacent one of the inner communication holes 513 of each of the inner plates 511 of the inner plate unit 51 of the one of the two adjacent ones of the inner links 5. Another one of the outer communication holes 610 of each of the outer plates 61 is in spatial communication with an adjacent one of the through holes 523 of the inner chain body 52 of another one of the two adjacent ones of the inner links 5, and is in spatial communication with an adjacent one of the inner communication holes 513 of each of the inner plates 511 of the inner plate unit 51 of the another one of the two adjacent ones of the inner links 5.

Referring to FIGS. 1 and 4, the rotation rods 7 respectively and rotatably extend through the bushings 516 (i.e., the rotation rods 7 rotatably extend through the corresponding inner communication holes 513 of the inner plates 511 of the inner plate units 51 of the inner links 5, and through the corresponding through holes 523 of the inner chain bodies 52 of the inner links 5), and are respectively and fixedly disposed in the outer communication holes 610 to interconnect the inner links 5 and the outer links 6 in series so that each of the inner links 5 is rotatable relative to each of two adjacent ones of the outer links 6.

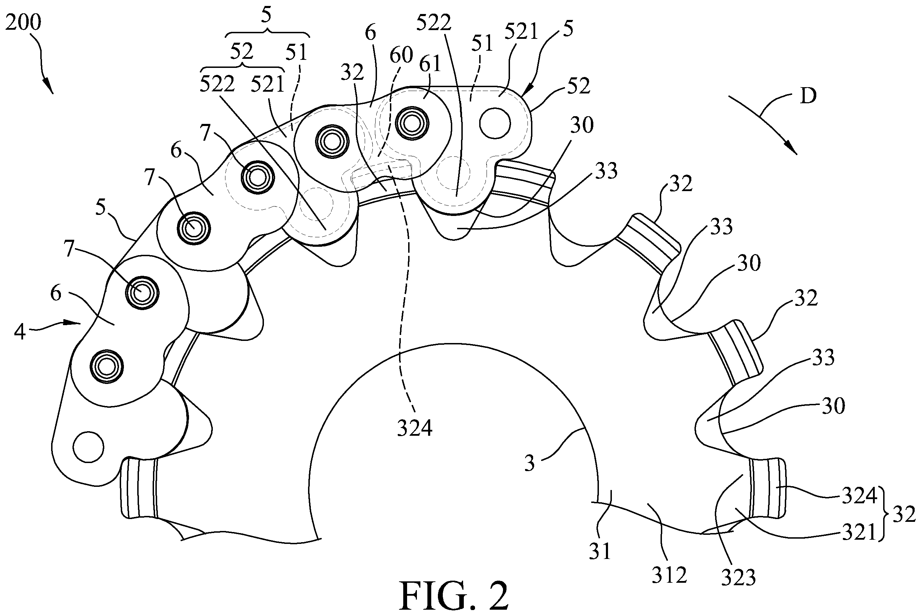

Referring to FIGS. 2, 4, and 5, when the first embodiment of the silent chain 4 is used in cooperation with the chainring 3, the engagement spaces 60 of the outer links 6 of the silent chain 4 are for the engagement teeth 32 of the chainring 3 to engage (i.e., each of the engagement teeth 32 is operable to engage the engagement space 60 of one of the outer links 6), and the tooth bases 30 are operable for the engagement protrusions 522 of the inner links 5 of the silent chain 4 to engage in the engagement direction. At this time, the tooth crown portion 324 of each of the engagement teeth 32 is limited between the outer plates 61 of the one of the outer links 6, which prevents the silent chain 4 from falling off in the width direction (W), thereby making engagement between the silent chain 4 and the chainring 3 during transmission more stable.

When the chainring 3 is driven, the engagement teeth 32 that engage the engagement spaces 60 respectively push the engagement protrusions 522 of the inner chain bodies 52 that are adjacent to the engagement spaces 60 which are engaged by the engagement teeth 32 in the transmission direction (D) (i.e., the engagement teeth 32 engage only the outer links 6, and the inner links 5 are pushed by the engagement teeth 32), thereby urging the silent chain 4 to move.

Because the inner chain bodies 52 of the inner links 5 are made of a nonmetallic material, noise that is generated when the chainring 3 engages the inner chain bodies 52 may be significantly reduced. Therefore, the silent chain 4 and the chainring 3 may have the merit of high rigidity and easy assembly, which is possessed by a conventional chain drive transmission, and further have the merit of being silent, which is possessed by a conventional belt drive transmission. Moreover, through structural designs of the inner links 5 and the outer links 6, the pitch of the inner links 5 and the pitch of the outer links 6 are not limited to being similar. In other words, the pitch of the inner links 5 and the pitch of the outer links 6 may be designed to have different ranges of sizes according to actual requirements.

In addition, structures of the sewage discharge grooves 33 of the chainring 3 allow dirt that attaches to the chainring 3 when the chainring 3 engages the silent chain 4 to slip off the chainring 3 radially inwardly along the sloping edges of the sewage discharge grooves 33, which greatly reduces accumulation of the dirt on the chainring 3. Furthermore, because each of the sewage discharge grooves 33 is configured to be an open structure, it is easy to clear the dirt off the chainring 3.

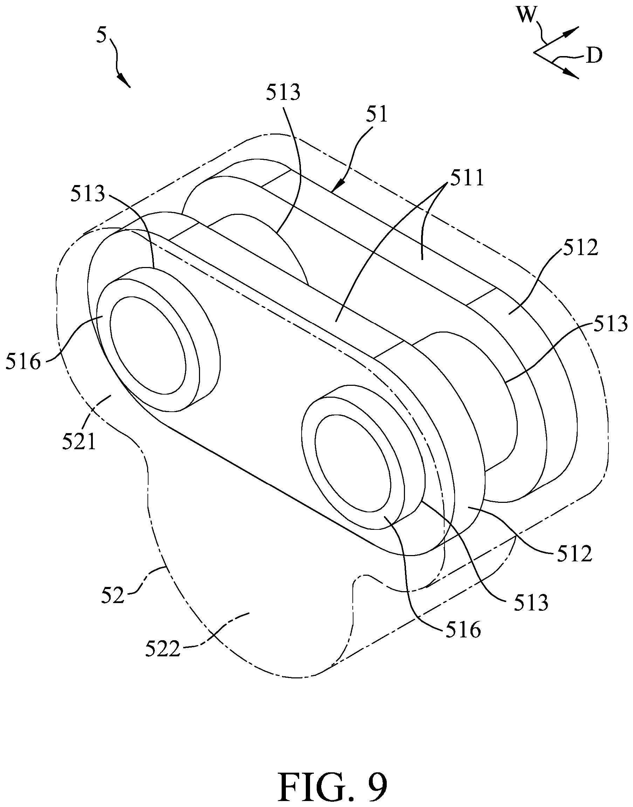

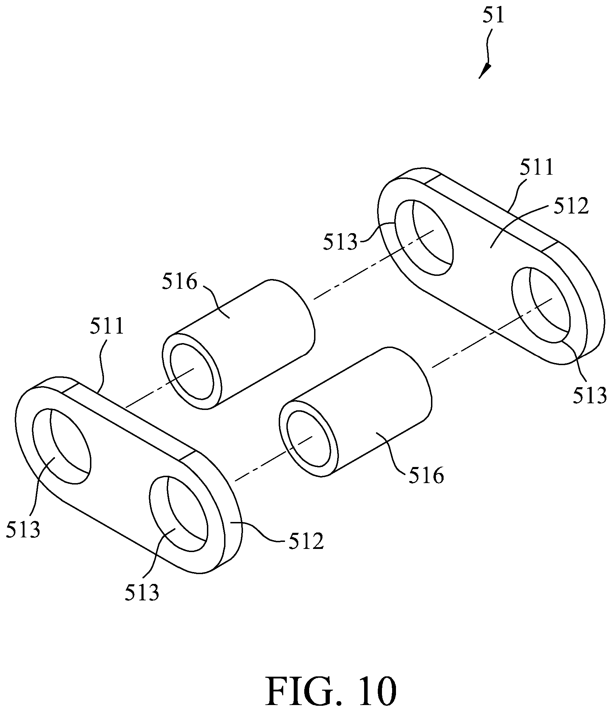

Referring to FIGS. 9 and 10, a second embodiment of the silent chain 4 according to the present disclosure differs from the first embodiment in structural design of the inner plate units 51 of the inner links 5. For convenience of description, only differences between the embodiments will be described below.

In the second embodiment, each of the inner plates 511 of the inner plate unit 51 only has the rotation connection portion 512 and the inner communication holes 513. That is to say, the protrusion portion is omitted. The inner chain body 52 covers the outer sides of the inner plates 511, and the outer periphery of each of the bushings 516.

Because the manner in which the inner links 5, the outer links 6 and the rotation rods 7 of the second embodiment of the silent chain 4 are assembled is similar to that of the first embodiment, and because the manner in which the silent chain 4 is used in cooperation with the chainring 3 is also similar to that of the first embodiment, detailed descriptions thereof are omitted.

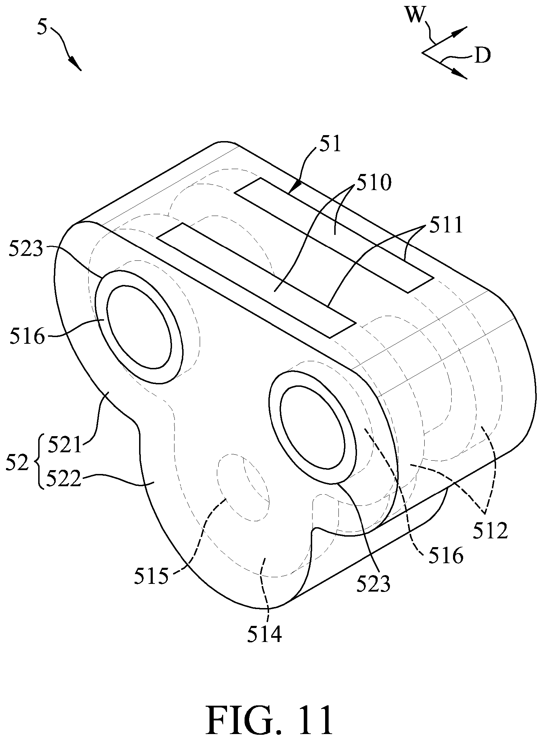

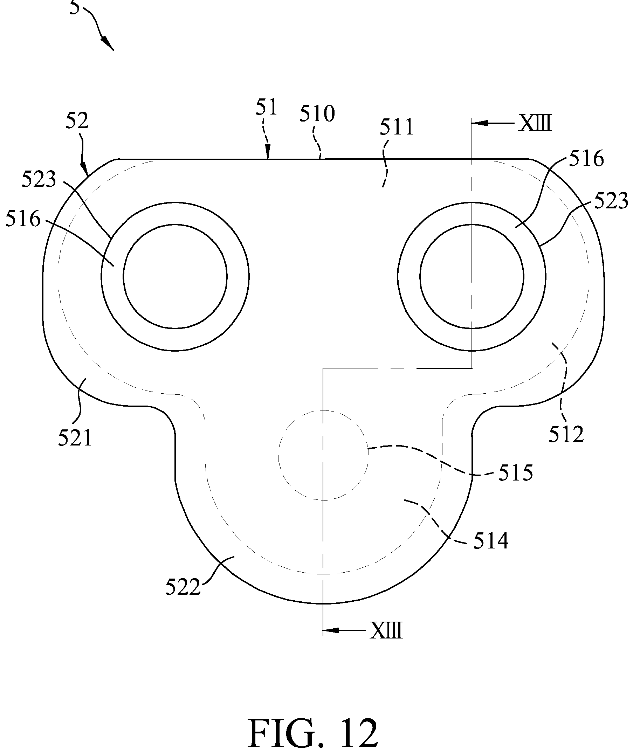

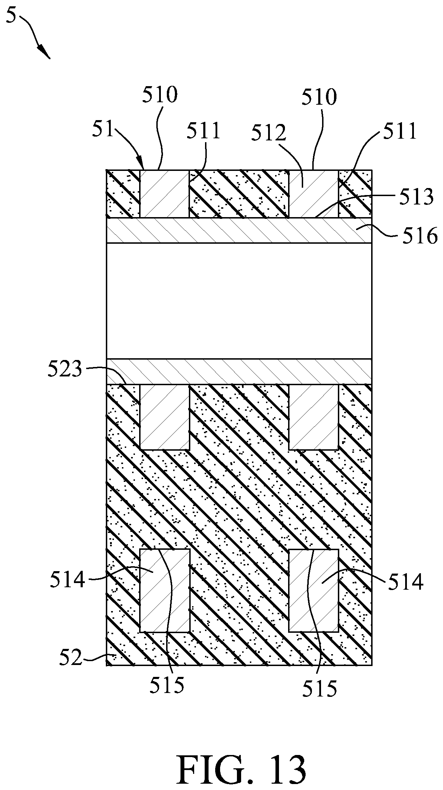

Referring to FIGS. 11 to 13, a third embodiment of the silent chain 4 according to the present disclosure differs from the first embodiment in the structural design of the inner links 5.

In the third embodiment, the rotation connection portion 512 of each of the inner plates 511 has an outer side section 510 that is opposite to the engagement direction (i.e., opposite to the protrusion portion 514 of the inner plate 511 in the engagement direction). The main body portion 521 of the inner chain body 52 that covers the outer sides of the rotation connection portions 512 of the inner plates 511 is flush with the outer side sections 510 of the inner plates 511 such that the outer side sections 510 of the inner plates 511 are exposed from the inner chain body 52.

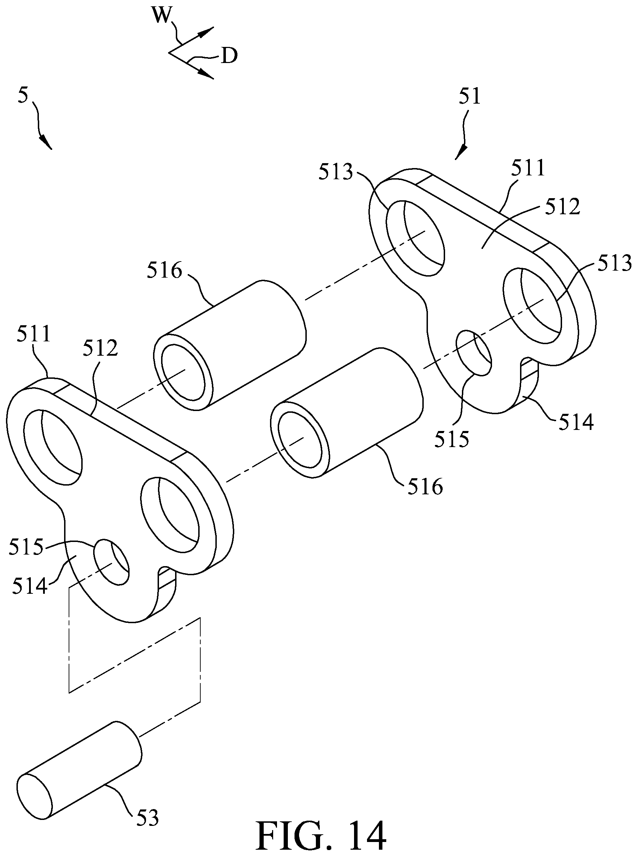

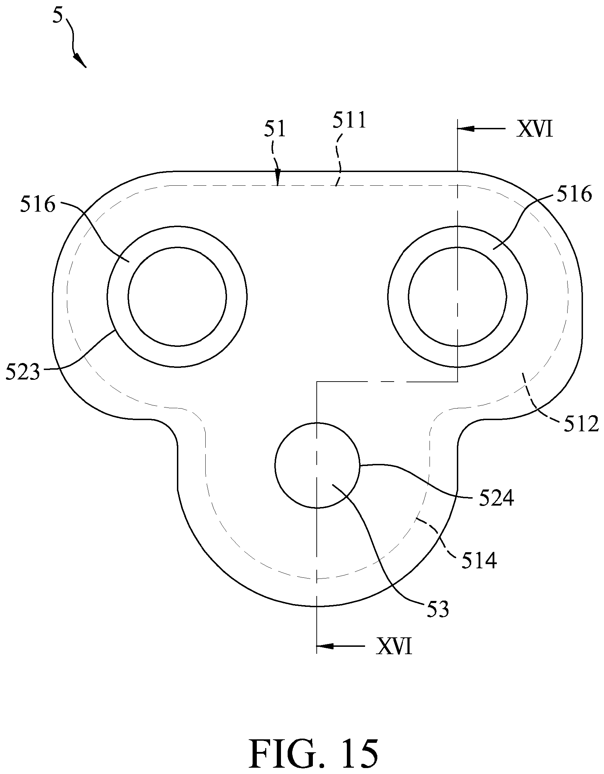

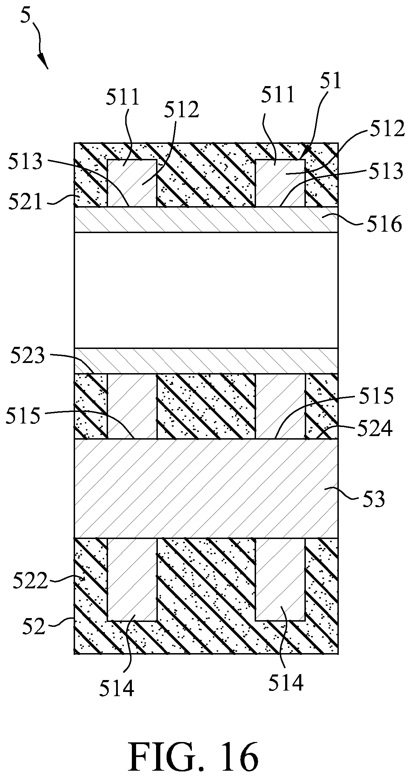

Referring to FIGS. 14 to 16, a fourth embodiment of the silent chain 4 according to the present disclosure differs from the first embodiment in the structural design of the inner links 5.

In the fourth embodiment, the engagement protrusion 522 of the inner chain body 52 is formed with an outer hole 524 that extends therethrough, and that is in spatial communication with the inner hole 515 of each of the inner plates 511. The inner link 5 further includes a columnar member 53 that is fixedly disposed in and extends through the inner hole 515 of each of the inner plates 511 of the inner plate unit 51 thereof and the outer hole 524 of the inner chain body 52 thereof which is in spatial communication with the inner hole 515 of each of the inner plates 511. Through this configuration, the structural strength of the inner link 5 may be increased.

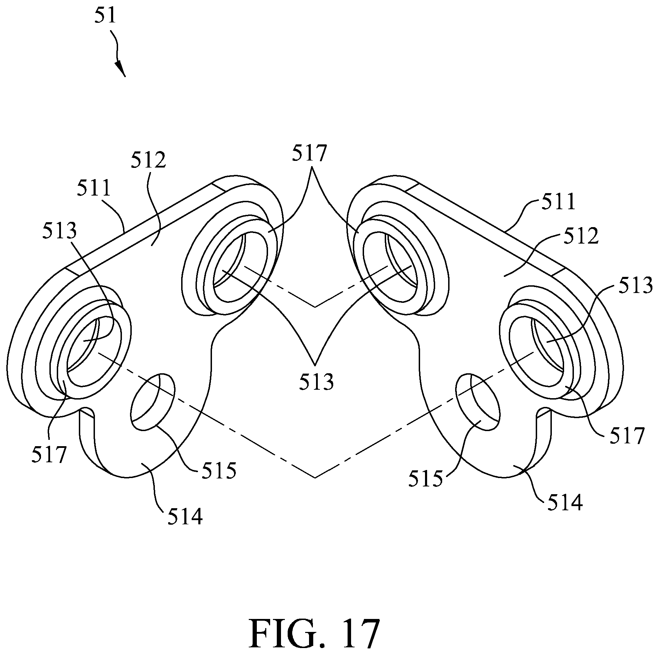

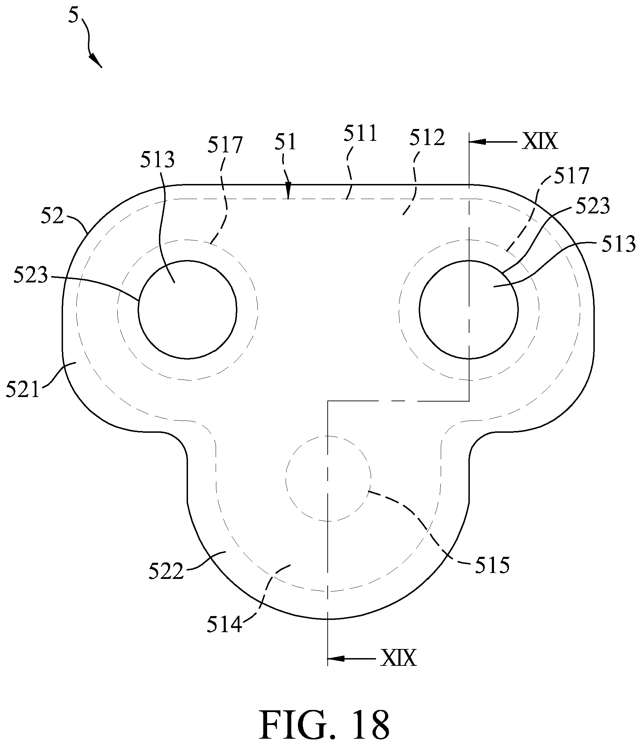

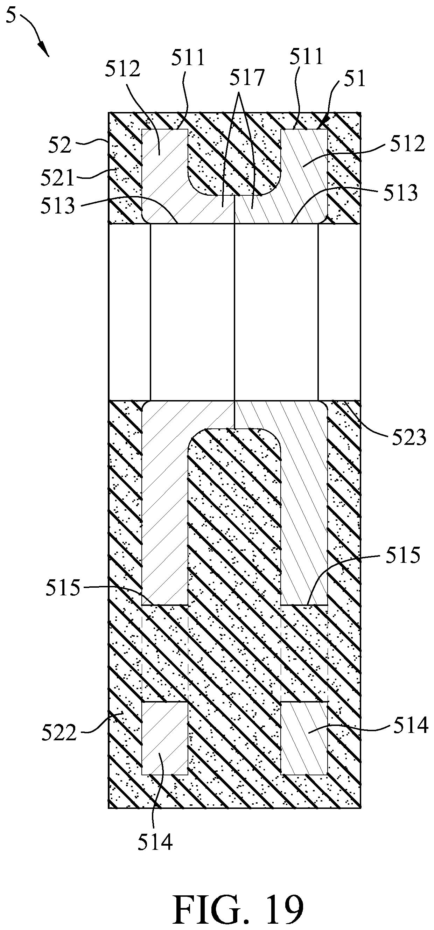

Referring to FIGS. 17 to 19, a fifth embodiment of the silent chain 4 according to the disclosure differs from the first embodiment in the structural design of the inner links 5.

In the fifth embodiment, the inner plate units 51 of the inner links 5 are not provided with the bushings. Each of the inner plates 511 further has two annular flange portions 517 that protrude from the rotation connection portion 512 thereof toward another one of the inner plates 511, and that respectively surround the inner communication holes 513 thereof. The inner plates 511 abut against each other via the flange portions 517 thereof. The main body portion 521 of the inner chain body 52 covers the outer sides of the rotation connection portions 512 of the inner plates 511, and covers an outer periphery of each of the flange portions 517 of the inner plates 511.

The rotation rods 7 (not shown) respectively and rotatably extend through the inner communication holes 513 of each of the inner plates 511, and through the flange portions 517 of each of the inner plates 511 of the inner plate units 51 of the inner links 5. Each of the rotation rods 7 has two ends. One end of each of the rotation rods 7 extends through and is fixedly disposed in a respective one of the outer communication holes 610 (not shown) of the outer plates 61 (not shown) that are disposed on the one of the opposite sides of the inner chain bodies 52, and another end of each of the rotation rods 7 extends through and is fixedly disposed in a respective one of the outer communication holes 610 (not shown) of the outer plates 61 (not shown) that are disposed on the another one of the opposite sides of the inner chain bodies 52.

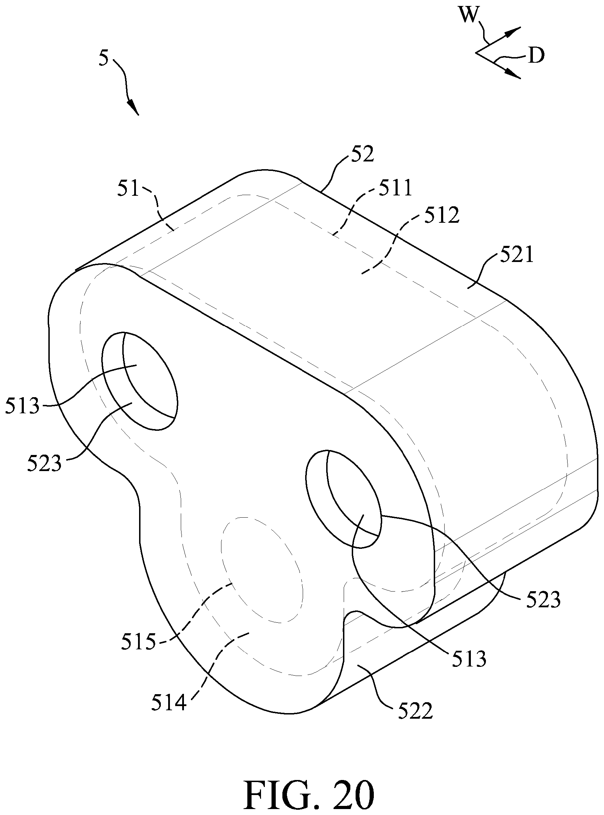

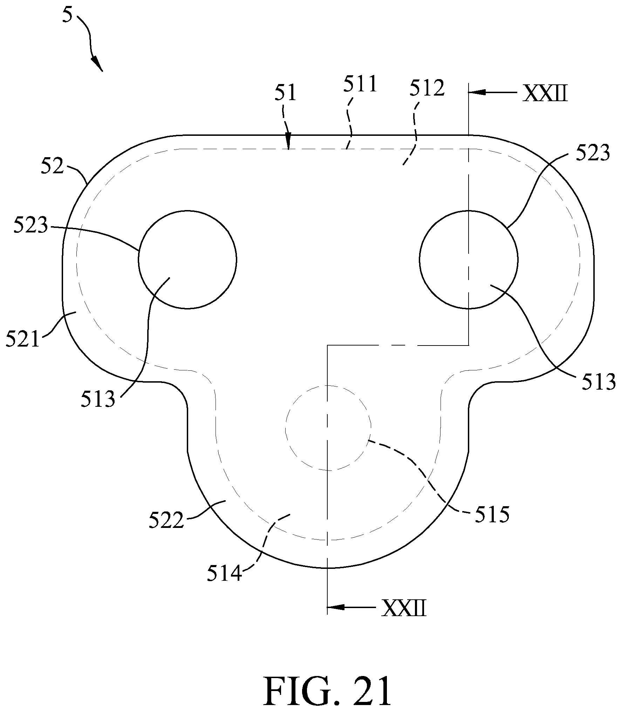

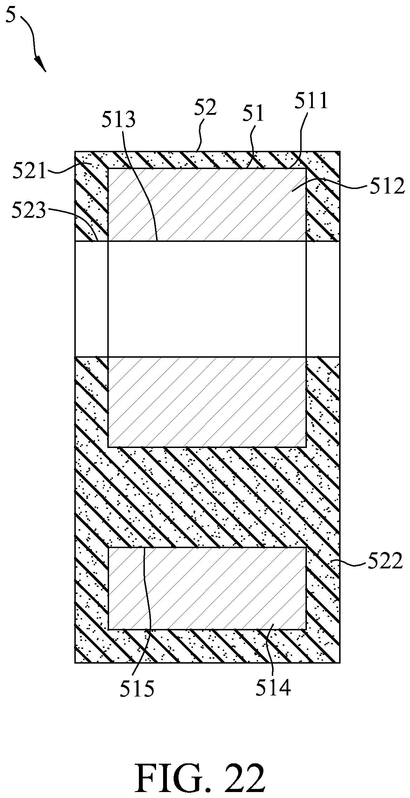

Referring to FIGS. 20 to 22, a sixth embodiment of the silent chain 4 according to this disclosure differs from the first embodiment in the structural design of the inner links 5.

In the sixth embodiment, the inner link 5 includes an inner plate unit 51, and an inner chain body 52 that covers the inner plate unit 51. The inner plate unit 51 includes only one inner plate 511. A thickness of the inner plate 511 of the sixth embodiment in the width direction (W) is larger than a thickness of each of the inner plates 511 of the first embodiment in the width direction (W). The inner chain body 52 covers an outer side of the inner plate 511, and fills the inner hole 515 of the inner plate 511.

The rotation rods 7 (not shown) respectively and rotatably extend through the inner communication holes 513 of the inner plate 511, respectively and rotatably extend through the through holes 523 of the inner chain body 52, and are fixedly disposed in the outer plates 61 (not shown).

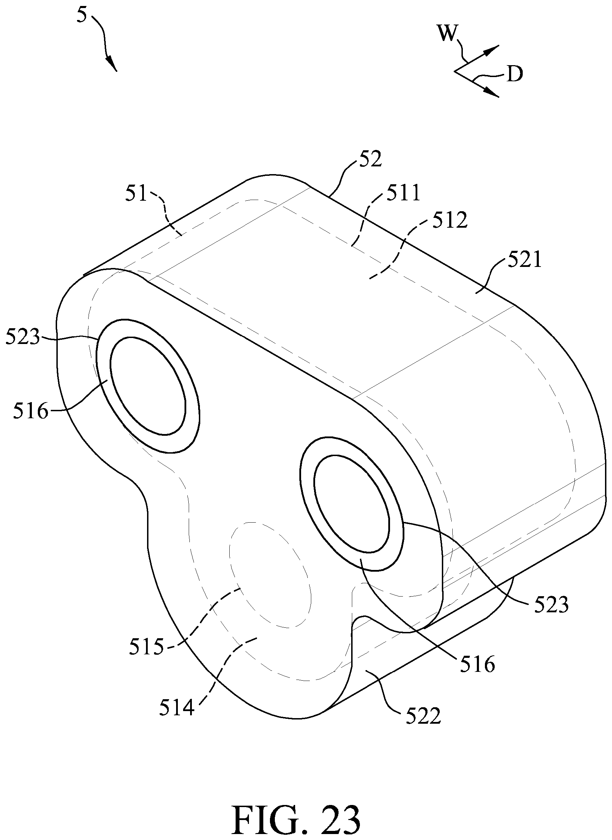

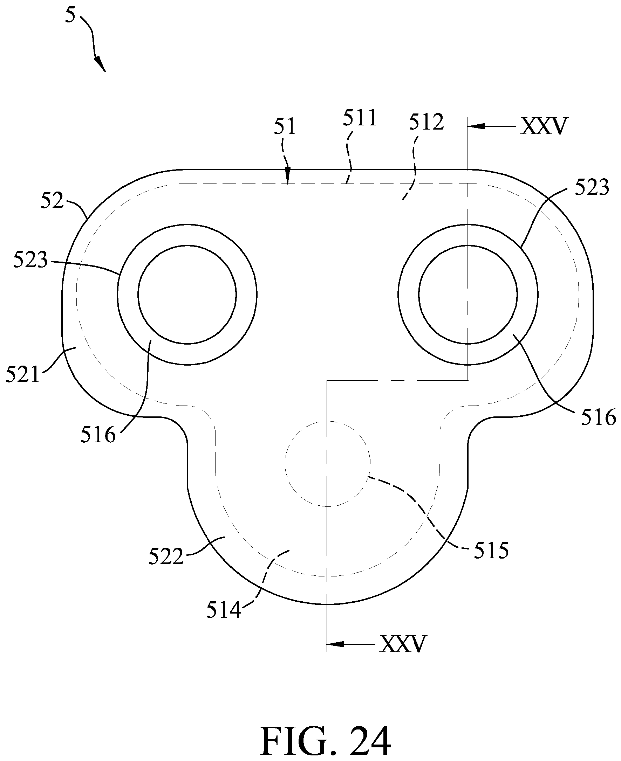

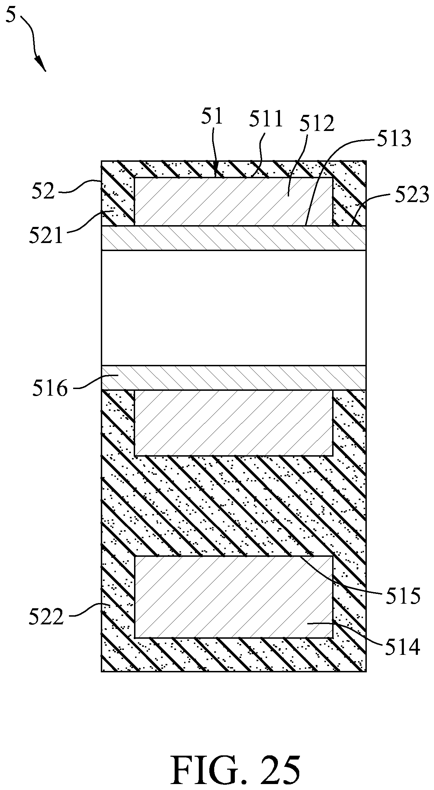

Referring to FIGS. 23 to 25, a seventh embodiment of the silent chain 4 according to the disclosure differs from the sixth embodiment in the structural design of the inner links 5.

In the seventh embodiment, the inner plate unit 51 further includes two bushings 516 that are respectively and fixedly disposed in the inner communication holes 513 of the inner plate 511, that respectively extend through the inner communication holes 513 of the inner plate 511, and that respectively extend through the through holes 523 of the inner chain body 52. The rotation rods 7 (not shown) respectively and rotatably extend through the bushings 516 of the inner plate unit 51.

In summary, through the structural design of the silent chain 4, the conventional chain drive transmission's merit of high structural strength and the conventional belt drive transmission's merit of low vibration noise may be combined. In addition, through the structural designs of the inner links 5 and the outer links 6, the pitch of the inner links 5 and the pitch of the outer links 6 are not limited to being similar, and the pitch of the inner links 5 and the pitch of the outer links 6 may be designed to have different ranges of sizes according to actual requirements, so as to meet demands for various types of vehicles and for chains with different lengths.

In addition, by virtue of the outer links 6 and the inner links 5 cooperatively defining the engagement spaces 60, and by virtue of the outer plates 61 of each of the outer links 6 that define the engagement space 60 limiting the tooth outer surface 322 and the tooth inner surface 323 of the one of the engagement teeth 32 that engage the engagement spaces 60, the silent chain 4 may be guided and prevented from falling off. Moreover, via the structural designs of the engagement protrusions 522 of the inner chain bodies 52 and the tooth crown portions 324 of the engagement teeth 32 of the chainring 3, a contact area between each of the inner links 5 and the one of the engagement teeth 32 may be increased, thereby increasing the efficiency of the power transmission. Furthermore, by virtue of the tooth crown portion 324 of each of the engagement teeth 32 extending outwardly in the width direction (W), the structural strength, rigidity and wear resistance of the entire chainring 3 are enhanced, which makes the chainring 3 able to withstand a higher torque, and the chainring 3 has a relatively simple structure and is easy to manufacture and maintain.

Therefore, the silent chain 4 and the chainring 3 according to the present disclosure are indeed innovative and practical, and the purpose of the present disclosure is indeed achieved.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A silent chain (4) comprising:
a plurality of inner links (5) arranged along a transmission direction (D);
a plurality of outer links (6) spaced apart from each other along the transmission direction (D); and
a plurality of rotation rods (7);
**characterized in that**:
at least one of the plurality of inner links (5) includes an inner plate unit (51), and an inner chain body (52) that is fixedly disposed on and covers an outer side of the inner plate unit (51) and that is made of a nonmetallic material, the inner chain body (52) of the at least one of the plurality of inner links (5) having an engagement protrusion (522) that protrudes in an engagement direction;
the plurality of outer links (6) are disposed on outer sides of the plurality of inner links (5), the plurality of outer links (6) and the plurality of inner links (5) being disposed in an alternating arrangement along the transmission direction (D), each of the plurality of outer links (6) including two outer plates (61) that are oppositely and respectively disposed on the outer sides of two adjacent ones of the plurality of inner links (5), and cooperating with the inner chain bodies (52) of the two adjacent ones of the plurality of inner links (5) to define an engagement space (60); and
the plurality of rotation rods (7) interconnect the plurality of inner links (5) and the plurality of outer links (6) in series so that each of the plurality of inner links (5) is rotatable relative to each of two adjacent ones of the plurality of outer links (6).

2. The silent chain (4) as claimed in claim 1, wherein:
the inner plate unit (51) of the at least one of the plurality of inner links (5) includes at least one inner plate (511) that has a rotation connection portion (512), and two inner communication holes (513) spaced apart from each other and formed in the rotation connection portion (512), the inner chain body (52) of the at least one of the plurality of inner links (5) further having a main body portion (521), and two through holes (523) that are formed in the main body portion (521) and that are respectively in spatial communication with the inner communication holes (513) of the at least one inner plate (511) of the inner plate unit (51), the engagement protrusion (522) of the inner chain body (52) protruding from the main body portion (521) in the engagement direction, the at least one of the plurality of inner links (5) including at least two of the plurality of inner links (5) that are adjacent to one of the plurality of outer links (6), each of the outer plates (61) of the plurality of outer links (6) having two outer communication holes (610);
for the one of the plurality of outer links (6) that is adjacent to the at least two of the plurality of inner links (5), one of the outer communication holes (610) of each of the outer plates (61) is in spatial communication with an adjacent one of the through holes (523) of the inner chain body (52) of one of the at least two of the plurality of inner links (5) and is in spatial communication with an adjacent one of the inner communication holes (513) of the at least one inner plate (511) of the inner plate unit (51) of the one of the at least two of the plurality of inner links (5), and another one of the outer communication holes (610) of each of the outer plates (61) is in spatial communication with an adjacent one of the through holes (523) of the inner chain body (52) of another one of the at least two of the plurality of inner links (5) and is in spatial communication with an adjacent one of the inner communication holes (513) of the at least one inner plate (511) of the inner plate unit (51) of the another one of the at least two of the plurality of inner links (5);
one of the rotation rods (7) rotatably extends through the adjacent one of the inner communication holes (513) of the at least one inner plate (511) of the inner plate unit (51) of the one of the at least two of the plurality of inner links (5) and the adjacent one of the through holes (523) of the inner chain body (52) of the one of the at least two of the plurality of inner links (5), and is fixedly disposed in the one of the outer communication holes (610) of each of the outer plates (61) of the one of the plurality of outer links (6) that is adjacent to the at least two of the plurality of inner links (5); and
another one of the rotation rods (7) rotatably extends through the adjacent one of the inner communication holes (513) of the at least one inner plate (511) of the inner plate unit (51) of the another one of the at least two of the plurality of inner links (5) and the adjacent one of the through holes (523) of the inner chain body (52) of the another one of the at least two of the plurality of inner links (5), and is fixedly disposed in the another one of the outer communication holes (610) of each of the outer plates (61) of the one of the plurality of outer links (6) that is adjacent to the at least two of the plurality of inner links (5).

3. The silent chain (4) as claimed in claim 2, wherein the at least one inner plate (511) of the inner plate unit (51) of each of the at least two of the plurality of inner links (5) further has a protrusion portion (514) that protrudes from the rotation connection portion (512) thereof in the engagement direction, for each of the at least two of the plurality of inner links (5), a length of the protrusion portion (514) of the at least one inner plate (511) of the inner plate unit (51) in the engagement direction being no greater than a length of the engagement protrusion (522) of the inner chain body (52) in the engagement direction, and the engagement protrusion (522) of the inner chain body (52) covering the protrusion portion (514) of the at least one inner plate (511) of the inner plate unit (51).

4. The silent chain (4) as claimed in claim 2, wherein:
the at least one inner plate (511) of the inner plate unit (51) of each of the at least two of the plurality of inner links (5) includes two inner plates (511) that are arranged oppositely, each of the inner plates (511) further having two annular flange portions (517) that respectively surround the inner communication holes (513) thereof and that protrude from the rotation connection portion (512) thereof toward another one of the inner plates (511);
for each of the at least two of the plurality of inner links (5), the main body portion (521) of the inner chain body (52) covers the rotation connection portion (512) of each of the inner plates (511) of the inner plate unit (51), and an outer periphery of each of the flange portions (517) of the inner plates (511) of the inner plate unit (51); and
the one of the rotation rods (7) rotatably extends through an adjacent one of the flange portions (517) of each of the inner plates (511) of the inner plate unit (51) of the one of the at least two of the plurality of inner links (5), the another one of the rotation rods (7) rotatably extending through an adjacent one of the flange portions (517) of each of the inner plates (511) of the inner plate unit (51) of the another one of the at least two of the plurality of inner links (5).

5. The silent chain (4) as claimed in claim 2, wherein, for each of the at least two of the plurality of inner links (5), the at least one inner plate (511) of the inner plate unit (51) further has an outer side section (510) opposite to the engagement direction, and the main body portion (521) of the inner chain body (52) covers the rotation connection portion (512) of the at least one inner plate (511) and is flush with the outer side section (510) of the at least one inner plate (511).

6. The silent chain (4) as claimed in any one of claims 2 and 5, wherein the at least one inner plate (511) of the inner plate unit (51) of each of the at least two of the plurality of inner links (5) further has an inner hole (515).

7. The silent chain (4) as claimed in claim 6, wherein, for each of the at least two of the plurality of inner links (5), the inner chain body (52) fills the inner hole (515) of the at least one inner plate (511) of the inner plate unit (51).

8. The silent chain (4) as claimed in claim 6, wherein, for each of the at least two of the plurality of inner links (5), the inner chain body (52) further has an outer hole (524) that is in spatial communication with the inner hole (515) of the at least one inner plate (511) of the inner plate unit (51).

9. The silent chain (4) as claimed in claim 8, wherein each of the at least two of the plurality of inner links (5) further includes a columnar member (53) that extends through the inner hole (515) of the at least one inner plate (511) of the inner plate unit (51) thereof and the outer hole (524) of the inner chain body (52) thereof which is in spatial communication with the inner hole (515).

10. The silent chain (4) as claimed in claim 2, wherein:
the at least one inner plate (511) of the inner plate unit (51) of each of the at least two of the plurality of inner links (5) includes two inner plates (511) that are spaced apart from each other and that are arranged oppositely, the inner plate unit (51) of each of the at least two of the plurality of inner links (5) further including two bushings (516) that respectively extend through and stick out from the inner communication holes (513) of each of the inner plates (511);
for each of the at least two of the plurality of inner links (5), the main body portion (521) of the inner chain body (52) covers the rotation connection portion (512) of each of the inner plates (511) of the inner plate unit (51), and an outer periphery of each of the bushings (516) of the inner plate unit (51); and
the one of the rotation rods (7) rotatably extends through an adjacent one of the bushings (516) of the inner plate unit (51) of the one of the at least two of the plurality of inner links (5), the another one of the rotation rods (7) rotatably extending through an adjacent one of the bushings (516) of the inner plate unit (51) of the another one of the at least two of the plurality of inner links (5).

11. The silent chain (4) as claimed in any one of claims 4 and 10, wherein, for each of the at least two of the plurality of inner links (5), each of the inner plates (511) of the inner plate unit (51) further has a protrusion portion (514) that protrudes from the rotation connection portion (512) thereof in the engagement direction, a length of the protrusion portion (514) of each of the inner plates (511) of the inner plate unit (51) in the engagement direction is no greater than a length of the engagement protrusion (522) of the inner chain body (52) in the engagement direction, and the engagement protrusion (522) of the inner chain body (52) covers the protrusion portion (514) of each of the inner plates (511) of the inner plate unit (51).

12. The silent chain (4) as claimed in any one of claims 1 to 11, wherein, for the at least one of the plurality of inner links (5), the inner chain body (52) is fixedly disposed on and covers the outer side of the inner plate unit (51) via an overmolding process.

13. The silent chain (4) as claimed in any one of claims 1 to 12, wherein a difference between a pitch of the plurality of inner links (5) and a pitch of the plurality of outer links (6) is greater than 0.3 millimeters but less than a smaller one of the pitch of the plurality of inner links (5) and the pitch of the plurality of outer links (6).

14. A chainring (3) adapted for driving the silent chain (4) of claim 1, the chainring (3) comprising:
an annular main body (31), and a plurality of engagement teeth (32) that are spaced apart from each other;
**characterized in that**:
the plurality of engagement teeth (32) are arranged about a central axis of the annular main body (31) and protrude from an outer periphery of the annular main body (31), each of the plurality of engagement teeth (32) being operable to engage the engagement space (60) of one of the plurality of outer links (6) of the silent chain (4), each of the plurality of engagement teeth (32) having a tooth portion (321) that protrudes radially and outwardly from the annular main body (31), and a tooth crown portion (324) that is connected to an end of the tooth portion (321), the tooth portion (321) of each of the plurality of engagement teeth (32) having a tooth inner surface (323), and a tooth outer surface (322) that is opposite to the tooth inner surface (323), the tooth portions (321) of any two adjacent ones of the plurality of engagement teeth (32) cooperatively defining a tooth base (30) that is operable for the engagement protrusion (522) of the inner chain body (52) of the at least one of the plurality of inner links (5) of the silent chain (4) to engage.

15. The chainring (3) as claimed in claim 14, wherein, for each of the plurality of engagement teeth (32), a thickness (D1) of the tooth crown portion (324) is greater than a thickness of the tooth portion (321), and the tooth crown portion (324) protrudes from one of the tooth inner surface (323) and the tooth outer surface (322) of the tooth portion (321) in a width direction (W).

16. The chainring (3) as claimed in claim 14, wherein, for each of the plurality of engagement teeth (32), a thickness (D1) of the tooth crown portion (324) is greater than a thickness of the tooth portion (321), and the tooth crown portion (324) protrudes symmetrically from the tooth inner surface (323) and the tooth outer surface (322) of the tooth portion (321) in a width direction (W).

17. The chainring (3) as claimed in any one of claims 15 and 16, wherein the thickness (D1) of the tooth crown portion (324) of each of the plurality of engagement teeth (32) is no greater than a width (D2) of each of the plurality of inner links (5).

18. The chainring (3) as claimed in any one of claims 14 to 17, wherein the annular main body (31) has an inner side surface (312), an outer side surface (311) that is opposite to the inner side surface (312), and at least one sewage discharge groove (33) that is recessed from one of the inner side surface (312) and the outer side surface (311), that broadens radially outwardly, and that extends from the one of the inner side surface (312) and the outer side surface (311) to the tooth base (30).

19. The chainring (3) as claimed in any one of claims 14 to 18, wherein the plurality of engagement teeth (32) engage only the plurality of outer links (6).
